# EUROPEAN PATENT APPLICATION

(11) **EP 4 748 212 A1**
(43) Date of publication of application: **27.05.2026**
(21) Application number: 25213033.1
(22) Date of filing: 03.11.2025
(51) Int. Cl.: A01B 59/042

(54) **SYSTEM AND METHOD OF OPEARATING SUCH**

(30) Priority: 26.11.2024 US 202418960629
(71) Applicant: Deere & Company, Moline, IL 61265 (US)
(72) Inventor: HUBNER, Cary S., Mannheim (DE); YANKE, Bryan R., Mannheim (DE); WONDERLICH, Grant J., Mannheim (DE)
(74) Representative: Reichert, Christian

(57) **Abstract**

A system (90) is disclosed. The system (90), comprises mobile agricultural equipment (100), comprising: a towing vehicle (110) comprising a hitch (116); a towed vehicle (120) comprising a proximal end portion (127) coupled to the towing vehicle (110) via the hitch (116), wherein the proximal end portion (127) defines a nose (127') of the towed vehicle (120); a sensor array (140) comprising at least one sensor, wherein the sensor array (140) is configured to generate status information (155) related to a location, orientation, acceleration, and/or height of the at least one sensor; and an actuator (130) operable to adjust a relative height of the proximal end portion (127); and a control assembly (150) in communication with the sensor array (140) and the actuator (130); wherein the control assembly (150) is configured to determine an appropriate height adjustment for the nose (127') based on the status information (155), and to transmit a signal based upon the appropriate height adjustment. Further, a method of operating such system (90) is disclosed.

## Description

### TECHNICAL FIELD

The present disclosure generally relates to mobile agricultural equipment, and more particularly but not exclusively relates to systems and methods for adjusting a height of a nose of a towed vehicle.

### BACKGROUND

Mobile agricultural equipment is frequently used in agricultural operations, such as tilling, planting, distributing agricultural product (e.g., fertilizer, pesticides, and/or herbicides), harvesting, and other operations. Mobile agricultural equipment often includes a towing vehicle, which typically provides motive power, and a towed vehicle, which typically performs the work operation of the equipment. The towed vehicle typically includes a drawbar, a proximal end portion of which is releasably coupled to the towing vehicle, for example via a hitch. When traveling over uneven terrain, it may be the case that a raised portion of the terrain (e.g., a hill or terrace) comes between the wheels of the towing vehicle and the wheels of the towed vehicle. If the hill is of a sufficient height and grade, the drawbar may become lodged atop the raised portion, which can bottom out, high-center, and/or damage the agricultural equipment. For these reasons among others, there remains a need for further improvements in this technological field.

### SUMMARY

An exemplary towing vehicle generally includes a hitch, an actuator, and a control assembly. The hitch is configured for coupling with a proximal end portion of a towed vehicle, and the actuator is operable to adjust a height of the proximal end portion. The control assembly is in communication with the actuator and a sensor configured to generate status information related to a location, orientation, acceleration, and/or height of the sensor. The control assembly is configured to cause the actuator to adjust a height of the proximal end portion based upon the status information. Further embodiments, forms, features, and aspects of the present application shall become apparent from the description and figures provided herewith.

### BRIEF DESCRIPTION OF THE FIGURES

Fig. 1 is a side view of mobile agricultural equipment according to certain embodiments.
Fig. 2 is a schematic illustration of mobile agricultural equipment including an adjustable hitch operable to adjust a height of a nose of a trailing vehicle.
Fig. 3 is a schematic illustration of mobile agricultural equipment including an actuator operable to adjust a height of a nose of a trailing vehicle.
Fig. 4 is a schematic block diagram of a system according to certain embodiments.
Fig. 5 is a schematic illustration of mobile agricultural equipment according to certain embodiments.
Fig. 6 is a schematic illustration of mobile agricultural equipment traversing terrain as a towing vehicle ascends a rise in the terrain.
Fig. 7 is a schematic illustration of mobile agricultural equipment traversing terrain in as the towing vehicle descends the rise.
Fig. 8 is a schematic flow diagram of a process according to certain embodiments.
Fig. 9 is a schematic block diagram of a computing device that may be utilized in connection with certain embodiments.

### DETAILED DESCRIPTION OF ILLUSTRATIVE EMBODIMENTS

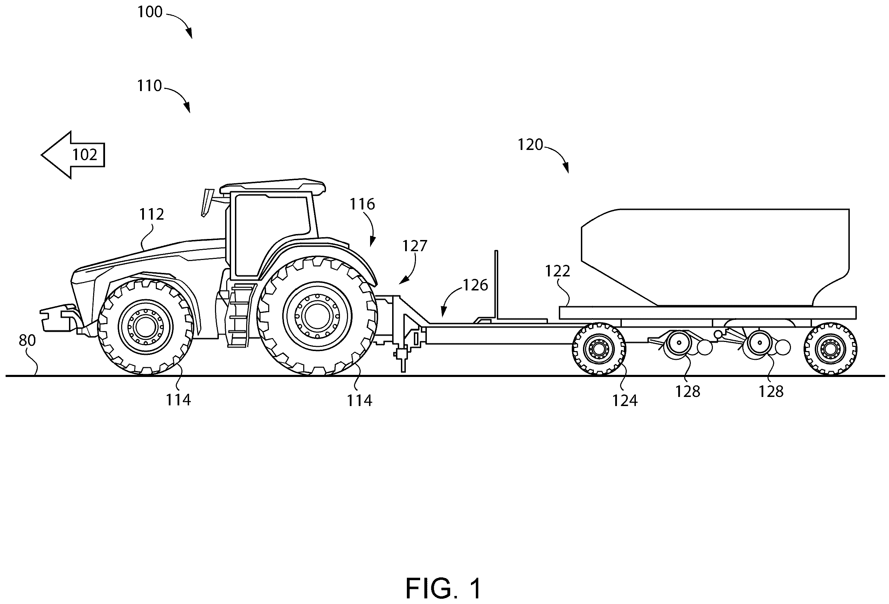

With reference to Fig. 1, illustrated therein is mobile agricultural equipment 100 according to certain embodiments while traveling across terrain 80 in a proximal direction of forward travel 102. The mobile agricultural equipment 100 generally includes a towing vehicle 110, a towed vehicle 120 trailing the towing vehicle 110, and an actuator 130 operable to adjust a height of a nose 127' of the towed vehicle 120.

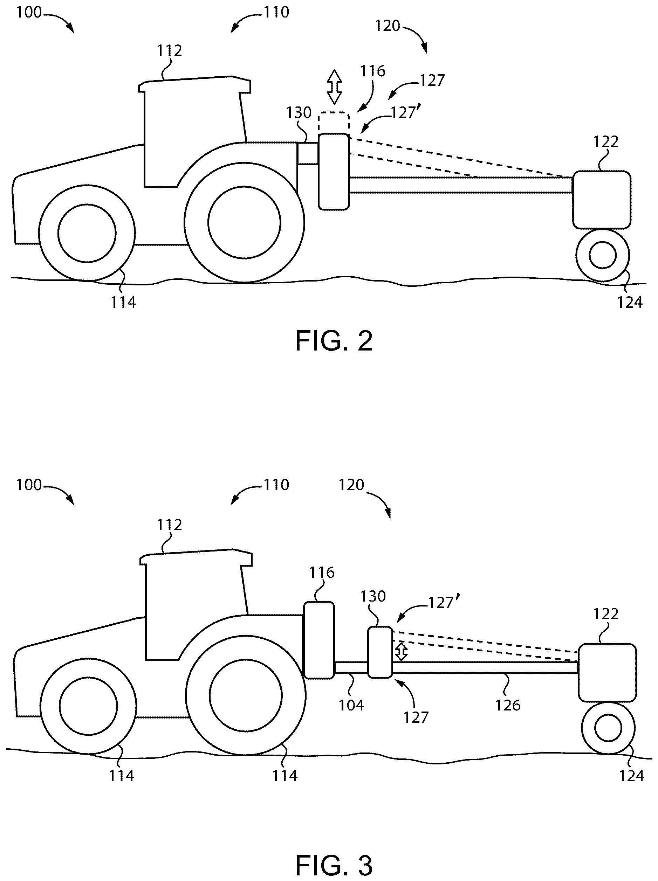

In the illustrated form, the towing vehicle 110 generally includes a body 112, wheels 114 mounted to the body 112, and a hitch 116 mounted to a distal or rear side of the body 112. In the illustrated form, the wheels 114 interface with the terrain 80 directly. It is also contemplated that the towing vehicle 110 may include a track wrapped about the wheels 114 such that the wheels 114 interface with the terrain 80 via the track. As described herein, the hitch 116 facilitates releasable coupling of the towing vehicle 110 and the towed vehicle 120. In certain embodiments, the hitch 116 may be an adjustable hitch, and the actuator 130 may be operable to adjust an effective height of the hitch 116, for example as described herein with reference to Fig. 2. It is also contemplated that the hitch 116 may be a fixed hitch. Regardless of whether the hitch 116 is fixed or adjustable, the actuator 130 may be operable to adjust a height of the nose 127' relative to the hitch 116, for example as described herein with reference to Fig. 3.

The illustrated towed vehicle 120 generally includes a body 122, wheels 124 mounted to the body 122, and a drawbar 126 that extends from the body 122 and includes a proximal end portion 127 defining the nose 127' of the towed vehicle 120. In the illustrated form, the wheels 124 interface with the terrain 80 directly. It is also contemplated that the towed vehicle 120 may include a track wrapped about the wheels 124 such that the wheels 124 interface with the terrain 80 via the track. It is further contemplated that the wheels 124 may be omitted in favor of another form of ground interface mechanism, such as skids. As described herein, the drawbar 126 is releasably coupled to the hitch 116, and the actuator 130 is operable to adjust a height of the nose 127'. The towed vehicle 120 typically performs the work of the agricultural operation, and may include one or more work elements 128 configured to perform the work. Non-limiting examples for the work performed by the work elements 128 include tilling, furrowing, and/or distributing agricultural product such as seed, fertilizer, herbicide, and/or pesticide.

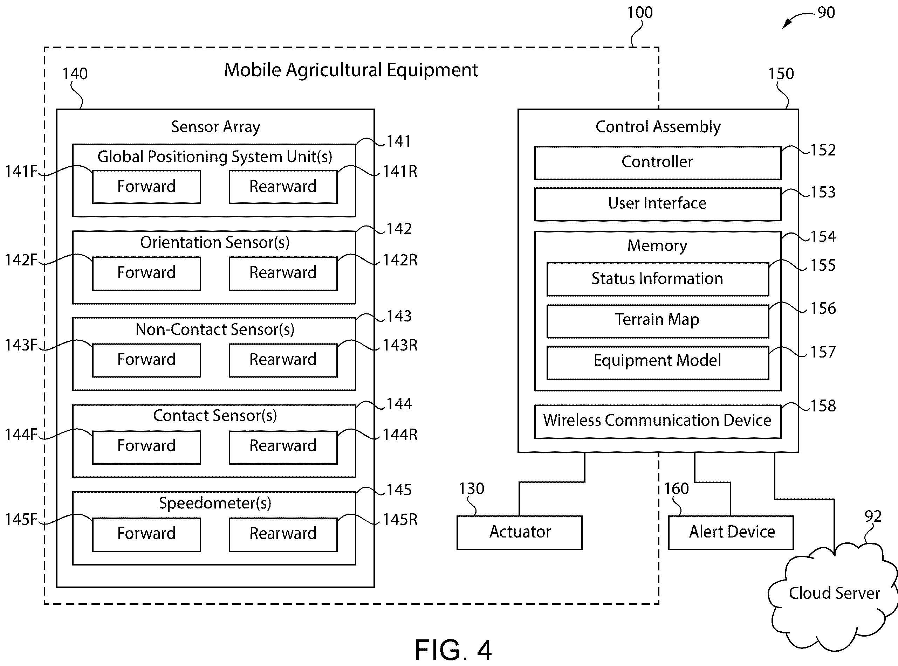

The actuator 130 is operable to adjust the relative height of the nose 127' of the towed vehicle 120. In the illustrated form, the actuator 130 is configured to adjust the height of the nose 127' based upon a height adjustment signal, such as one received from a control assembly 150 (Fig. 4). The actuator 130 may, for example, include a motor, a hydraulic cylinder, and/or another form of actuator that is operable to adjust a relative height of the nose 127' in response to a height adjustment signal.

As indicated above, the actuator 130 is operable to adjust the relative height of the nose 127' of the towed vehicle 120. As used herein, the term "relative height" may be used to refer to the height of the nose 127' relative to a fixed point on the towing vehicle 110. It should be appreciated that adjusting the relative height of the nose 127' may affect the pitch of the towed vehicle 120. In certain forms, the pitch of the towed vehicle 120 may correspond to the orientation of the drawbar 126 relative to a horizontal plane, wherein the horizontal plane is orthogonal to the vertical direction defined by gravity.

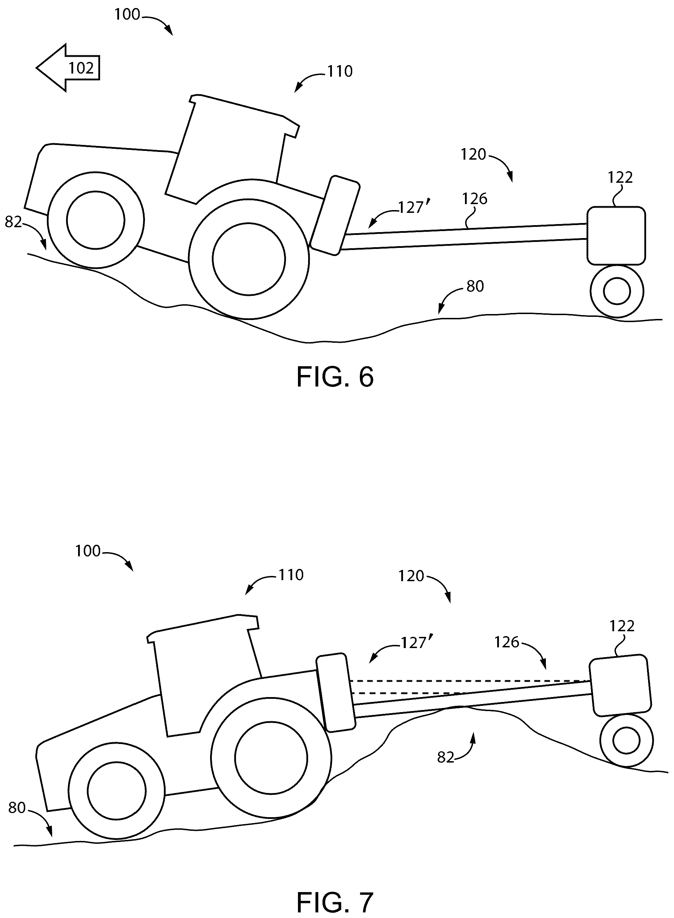

Those skilled in the art will readily recognize that the efficacy of the towed vehicle 120 in performing its work function may be affected by the pitch of the towed vehicle 120. For example, the work elements 128 may be configured for optimal performance when the pitch of the towed vehicle 120 is zero or horizontal. By way of illustration, in embodiments in which the towed vehicle is provided as a seeder, the work elements 128 may be configured to dig a furrow to a predetermined depth and deposit the seed in the furrow. In such forms, if the nose 127' is too high, the pitch of the towed vehicle 120 will be at an incline relative to horizontal, which may result in uneven distribution of the seeds. For example, work elements 128 toward the fore of the towed vehicle 120 may dig their furrows more shallow than intended, while the work elements 128 toward the aft of the towed vehicle 120 may dig their furrows deeper than intended. Thus, while raising the nose 127' may be useful in avoiding contact with a rise 82 in the terrain 80 (as described herein with reference to Figs. 6 and 7), it may be desirable to maintain the pitch of the towed vehicle 120 within a predetermined angular range in order to promote proper performance of the work function.

With additional reference to Fig. 2, in certain forms, the hitch 116 may be an adjustable hitch, and the actuator 130 may be operable to adjust a height of the hitch 116 to thereby adjust the height of the nose 127' of the towed vehicle 120. For example, the actuator 130 may be mounted to the towing vehicle 110 between the body 112 and the hitch 116 such that the actuator 130 is operable to adjust the height of the nose 127' between a lower position (illustrated in solid) and an upper position (illustrated in phantom). In certain embodiments, the actuator 130 may be operable to provide for continuous adjustment of the height of the nose 127' between the lower position and the upper position.

With additional reference to Fig. 3, in certain forms, the equipment 100 may include a tongue 104 that couples with the hitch 116, and the actuator 130 may be engaged between the tongue 104 and the drawbar 126 such that the actuator 130 is operable to adjust the height of the nose 127' relative to the tongue 104. For example, the actuator 130 may be mounted between the tongue 104 and the drawbar 126 such that the actuator 130 is operable to adjust the height of the nose 127' between a lower position (illustrated in solid) and an upper position (illustrated in phantom). In certain embodiments, the actuator 130 may be operable to provide for continuous adjustment of the height of the nose 127' between the lower position and the upper position. It should be appreciated that in embodiments in which the actuator 130 is provided between the tongue 104 and the drawbar 126, the hitch 116 may be either adjustable or fixed.

With additional reference to Fig. 4, the mobile agricultural equipment 100 may constitute a portion of a system 90 that further includes a sensor array 140 including at least one sensor, and a controller 150 in communication with the sensor array 140 and the actuator 130. As described herein, the sensor array 140 is configured to generate status information related to the location, orientation, acceleration, and/or height of the at least one sensor, and the controller 150 is configured to cause the actuator 130 to adjust a relative height of the nose 127' by transmitting the height adjustment signal based upon the status information.

In certain embodiments, the system 90 may include an alert device 160, which may be located at the equipment 100 or elsewhere. As described herein, the alert device 160 is configured to generate a user alert pertaining to an appropriate height adjustment. In certain forms, the alert device 160 may be configured to generate a visual alert, such as by activating or flashing a light, displaying one or more indicia, or another form of visual alert. Additionally or alternatively, the alert device 160 may be configured to generate an audible alert, such as a beep or buzz. In certain forms, the alert device 160 may be provided at the equipment. Additionally or alternatively, the alert device 160 may be provided elsewhere. By way of illustration, the alert device 160 may be a mobile device, such as a user's smartphone or tablet. As another example, the alert device may be a control panel of the equipment 100.

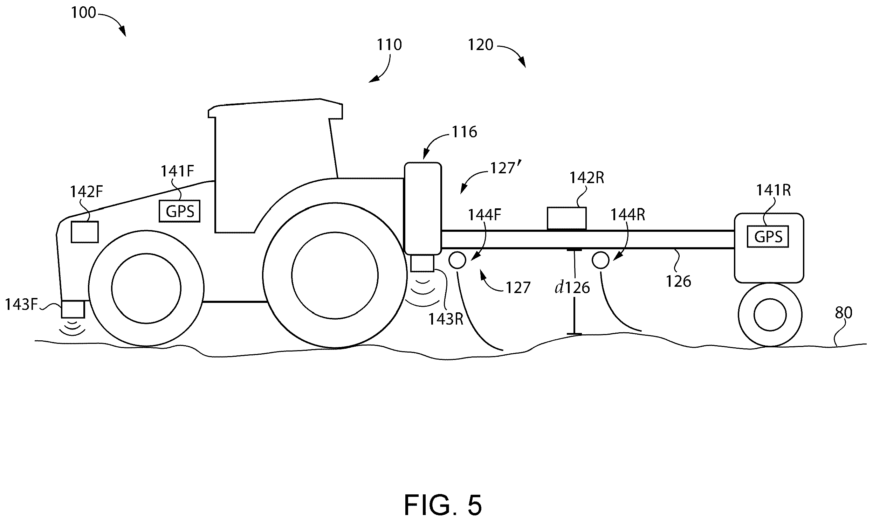

With additional reference to Fig. 5, the sensor array 140 includes at least one sensor, and is configured to generate status information related to the location, orientation, acceleration, and/or height of the at least one sensor. The sensor array 140 can include one or more global positioning system (GPS) units 141, one or more orientation sensors 142, one or more non-contact sensors 143, one or more contact sensors 144, and/or a speedometer 145. In certain embodiments, the sensor array 140 may include plural sensors, including at least a first sensor and a second sensor. In such forms, the first sensor and the second sensor may be of the same type, or they may be of different types.

In certain embodiments, the sensor array 140 may include at least one GPS unit 141, and the at least one GPS unit 141 may include plural GPS units. For example, the at least one GPS unit 141 may include a forward GPS unit 141F located at the towing vehicle 110 and a rearward GPS unit 141R located at the towed vehicle 120. As will be appreciated, each GPS unit 141 is operable to provide to the control assembly 150 information related to an absolute location of the vehicle to which the GPS unit 141 is mounted.

In certain embodiments, the sensor array 140 may include at least one orientation sensor 142, and the at least one orientation sensor 142 may include plural orientation sensors. For example, the at least one orientation sensor 142 may include a forward orientation sensor 142F located at the towing vehicle 110 and a rearward orientation sensor 142R located at the towed vehicle 120. While other forms are contemplated, in the illustrated embodiment, the forward orientation sensor 142F is located at the towing vehicle 110, and the rearward orientation sensor 142R is positioned on the drawbar 126 of the towed vehicle 120. Each orientation sensor 142 is operable to generate orientation information relating to a current orientation of the component to which it is mounted. In certain forms, the orientation sensor 142 is configured to generate information relating to the pitch, roll, and/or yaw of the vehicle to which it is mounted. For example, the orientation sensor 142 may include a tilt sensor.

Preferably, the orientation sensor 142 is configured to generate information relating to at least the pitch of the vehicle (i.e., the inclination of the vehicle's longitudinal axis relative to horizontal). Because the pitch of the vehicle corresponds to the grade of the terrain 80 over which the vehicle is traveling, information generated by the orientation sensor 142 is indicative of the contours of the terrain 80, and can also be considered terrain information in addition to status information. As described herein, in certain embodiments, orientation information generated by the orientation sensor(s) 142 may be utilized in conjunction with location information generated by the GPS unit(s) 141, for example to generate a terrain map 146 representative of the terrain 80.

As noted above, in certain embodiments, the orientation sensor 142 may include a tilt sensor operable to generate information related to the orientation of the sensor 142 relative to at least one axis (e.g., pitch). In certain embodiments, the orientation information generated by the orientation sensor is absolute orientation information (e.g., orientation relative to the earth). In certain embodiments, the orientation sensor 142 may further be configured to generate acceleration information. For example, the orientation sensor 142 may include an inertial measurement unit (IMU) that generates orientation and acceleration information.

In certain embodiments, the sensor array 140 may include at least one non-contact sensor 143, and the at least one non-contact sensor 143 may include plural non-contact sensors. For example, the at least one non-contact sensor 143 may include a forward non-contact sensor 143F located at the towing vehicle 110 and a rearward non-contact sensor 143R located distally of the forward non-contact sensor 143F. While other mounting locations are contemplated, in the illustrated form, the forward non-contact sensor 143F is positioned at a fore of the towing vehicle 110, and the rearward non-contact sensor 143R is positioned at or near the hitch 116. The non-contact sensor 143 is configured to generate information indicating the distance between the non-contact sensor 143 and the terrain 80 below the sensor 143. For example, if the non-contact sensor 143 is mounted to the drawbar 126, the non-contact sensor 143 may be configured to detect the distance d126 between that portion of the drawbar 126 and the terrain 80. The non-contact sensor 143 may be provided in any of a number of forms, including but not limited to ultrasonic, radar, and/or lidar.

In certain embodiments, the sensor array 140 may include at least one contact sensor 144, and the at least one contact sensor 144 may include plural contact sensors. For example, the at least one contact sensor 144 may include a forward contact sensor 144F located at the towing vehicle 110 and a rearward contact sensor 144R located distally of the forward contact sensor 144F. While other mounting locations are contemplated, in the illustrated form, the forward contact sensor 144F is positioned at or near the hitch 116, and the rearward contact sensor 144R is positioned at the drawbar 126. The contact sensor 144 is configured to contact the terrain 80 below the sensor 144 and to generate information indicating the distance between the contact sensor 144 and the terrain 80, which corresponds to the height of the contact sensor 144. In certain forms, a contact sensor 144 may include an extension that interfaces with the terrain 80, and the distance between the sensor 144 and the terrain 80 may be determined based upon the linear and/or rotational position of the extension relative to a base of the sensor 144. If the contact sensor 144 is mounted to the drawbar 126, the contact sensor 144 may be configured to detect the distance d126 between that portion of the drawbar 126 and the terrain 80. In certain forms, the extension may be provided in the form of a whisker, a ground-following wheel, or another form.

In certain embodiments, the sensor array 140 may include at least one speedometer 145, and the at least one speedometer 145 may include plural speedometers. For example, the at least one speedometer 145 may include a forward speedometer 145F located at the towing vehicle 110 and a rearward speedometer 145R located at the towed vehicle 120.

In certain embodiments, the status information generated by the sensor array 140 may include positional information. Positional information can include one or more of the following: absolute location information, relative location information, absolute orientation information, relative orientation information, acceleration information, and/or relative height information. In certain embodiments, positional information can include absolute location information (e.g., generated by a GPS unit), absolute orientation information (e.g., generated by a tilt sensor), acceleration information (e.g., generated by an IMU), and/or relative height information (e.g., generated by a non-contact sensor or a contact sensor).

The control assembly 150 generally includes a controller 152, and may further include a user interface 153, a memory 154, and/or a wireless communication device 158. The controller 152 is configured to control the actuator 130 to adjust the height of the nose 127' based on information received from the sensor array 140, and the wireless communication device 158 is configured to facilitate wireless communication with a component of the system 90 external to the agricultural equipment 100, such as a cloud server 92. Additionally, the memory 154 can be embodied in a non-transitory computer readable medium. In certain forms, the memory 154 may include status information 155, which may be generated by the sensor array 140 as described herein. In certain forms, the memory 154 may include a terrain map 156. As described herein, such a terrain map 156 may be preloaded into memory 154, or may be generated during use of the agricultural equipment 100. In certain forms, the memory 154 may include an equipment model 157 pertaining to the equipment 100. For example, the equipment model 157 may be a kinematic model, a dynamic model, or another form of computer model.

In certain embodiments, the user interface 153 may include a display, such as a touchscreen. The user interface 153 may facilitate a user's selection between a manual mode and an assisted mode. In the manual mode, the user may need to adjust the height of the nose 127' manually (e.g., by operating a lever). In the assisted mode, the control assembly 150 may automatically adjust the height of the nose based on information generated by the sensor array 140 without requiring further input from the user. In certain forms, the user interface 153 may display a graphical representation of the equipment 100 traversing terrain 80. For example, such a display may be based on information stored in the memory 154, such as the status information 155, the terrain map(s) 156, and/or the equipment model 157.

In certain embodiments, a portion or the entirety of the control assembly 150 may be provided at the equipment 100. It is also contemplated that at least a portion of the control assembly 150 may be located elsewhere, such as at the cloud server 92. In certain forms, the control assembly 150 may be spatially distributed. For example, one portion of the control assembly 150 may be provided at the equipment 100, and another portion of the control assembly 150 may be provided at the cloud server 92. Moreover, it should be appreciated that individual components and/or the functions thereof may be distributed across the equipment 100 and an external device. By way of illustration, the status information 155 may be stored in local memory provided at the equipment 100, and the equipment model 157 may be stored externally at the cloud server 92.

With additional reference to Figs. 6 and 7, illustrated therein is an example use case scenario in which the equipment 100 is performing an agricultural operation while traveling across uneven terrain 80 including a rise 82, such as a hill or a terrace. In Fig. 6, the towing vehicle 110 is climbing the inclined side of the rise 82, but the body 122 of the towed vehicle 120 remains on a relatively level portion of the terrain 80. As the equipment 100 continues to travel in the forward travel direction 102, the towing vehicle 110 passes the crest of the rise 82 and begins to descend on the declining side of the rise 82. If the nose 127' of the towed vehicle 120 is not raised, the drawbar 126 may impact the rise 82, which can bottom out, high-center, and/or otherwise damage the agricultural equipment 100. As described herein, however, the control system 150 is configured to control the actuator 130 to adjust the height of the nose 127' based at least in part upon information generated by the sensor array 140 to thereby avoid contact with the rise 82.

As indicated above, the control assembly 150 is configured to adjust the relative height of the nose 127' based upon information generated by the sensor array 140. In a simple example, the control assembly 150 may adjust the relative height of the nose 127' based entirely on real-time information generated by the sensor array 140. As one example, one or more height sensors (such as a non-contact sensor 143 and/or a contact sensor 144) may be positioned to detect the distance d126 between the drawbar 126 and the terrain 80, and information related to that distance d126 may be received by the control assembly 150 as status information 155. In such forms, the control assembly 150 may control the actuator 130 to maintain the distance d126 within a predetermined range. For example, the control assembly 150 may operate the actuator 130 to raise the nose 127' when the distance d126 falls below a lower threshold value, and may operate the actuator 130 to lower the nose 127' when the distance d126 exceeds an upper threshold value.

While the above example involves the controlling the height of the nose 127' based on real-time status information, it should be appreciated that there may be a non-trivial delay between the generation of information warranting an adjustment and the actual performance of the adjustment. In these forms and others, the control algorithm utilized by the control assembly 150 may take the speed or velocity of the equipment 100 into account. For example, if the information generated by the sensor array 140 indicates that the towing vehicle 110 is currently on the rise 82, the control assembly 150 may wait for a determined time duration before performing the appropriate height adjustment. For example, the control assembly 150 may wait to adjust the height in order to maintain a desired pitch of the towed vehicle 120 until the pitch needs to be adjusted to avoid contact with the rise 82. The time duration may be determined based upon the speed of the equipment 100. For example, the time duration may be shorter when the speed is higher, and longer when the speed is lower.

In certain embodiments, the control assembly 150 may utilize information generated by the GPS unit(s) 141 to determine when and how to adjust the height of the nose 127'. In one example, the information generated by the GPS unit(s) 141 is compared to a terrain map 156, such as a topographical terrain map, to determine an appropriate adjustment. In certain forms, the terrain map 156 may be a pre-generated map of the terrain 80, and the determining may be based upon the position of the GPS unit(s) 141 on the terrain map 156.

While certain embodiments may involve comparing GPS information to a pre-generated terrain map 156, it is also contemplated that a terrain map 156 may be generated on the fly, or during performance of the agricultural operation. For example, the control assembly 150 may generate a topographical terrain map 156 based on GPS information generated by the GPS unit(s) and orientation information (e.g., pitch information) generated by the orientation sensor(s) 142. In certain forms, the GPS unit 141 and the orientation sensor 142 may be separate components. It is also contemplated that the GPS unit 141 and the orientation sensor 142 may be integrated or combined in a single unit. In certain forms, the terrain map 156 may be a transient terrain map in which map information is discarded after use. It is also contemplated that the terrain map 156 may be built up over time and saved for later use in the same plot of terrain 80.

Although one example of generating a terrain map 156 based on GPS information and orientation information has been described, it should be appreciated that other combinations of sensors may be utilized to create a transient or non-transient terrain map 156. As one example, a terrain map 156 may be generated based on speed information generated by the speedometer(s) 145 and orientation information generated by the orientation sensor(s) 142. In another example, a terrain map 156 may be generated based upon acceleration and orientation information generated by orientation sensor(s) 142 such as IMU(s). In a further example, a terrain map 156 may be generated based upon speed information generated by the speedometer(s) 145 and height information generated by the non-contact sensor(s) 143 and/or the contact sensor(s) 144. In an additional example, a terrain map 156 may be generated based upon GPS information generated by the GPS unit(s) 141 and height information generated by the non-contact sensor(s) 143 and/or the contact sensor(s) 144.

In an example, the towing vehicle 110 includes a forward GPS unit 141F and a forward orientation sensor 142F, and the towed vehicle 120 includes a rearward GPS unit 141R and a rearward orientation sensor 142R. In this example, the location and pitch information of the towing vehicle 110 and the towed vehicle 120 are compared to calculate the angle differences and compensate accordingly. By way of illustration, the forward sensors may be used to generate a terrain map 156 indicating grade of the terrain 80 along the travel path, and the rearward sensors may be used to ensure that the drawbar 126 remains substantially parallel (e.g., within 5° of parallel or within 10° of parallel) to the terrain below the drawbar 126 in an effort to avoid collision with the terrain 80.

In certain forms, the determining of an adjustment may be based at least in part upon an equipment model 157 of the agricultural equipment 100. For example, the equipment model 157 may include a kinematic model of the equipment 100 and/or a dynamic model of the equipment 100. The equipment model 157 may include information regarding how the various components of the equipment 100 are able to move relative to one another during use of the equipment 100. Such a model may be utilized in combination with the status information 155 and/or the terrain map 156 to determine when adjustment is appropriate. For example, the control assembly 150 may generate a simulation of the equipment model 157 on the terrain map 156 and utilize collision detection algorithms to determine and avoid collisions between the drawbar 126 and the terrain 80.

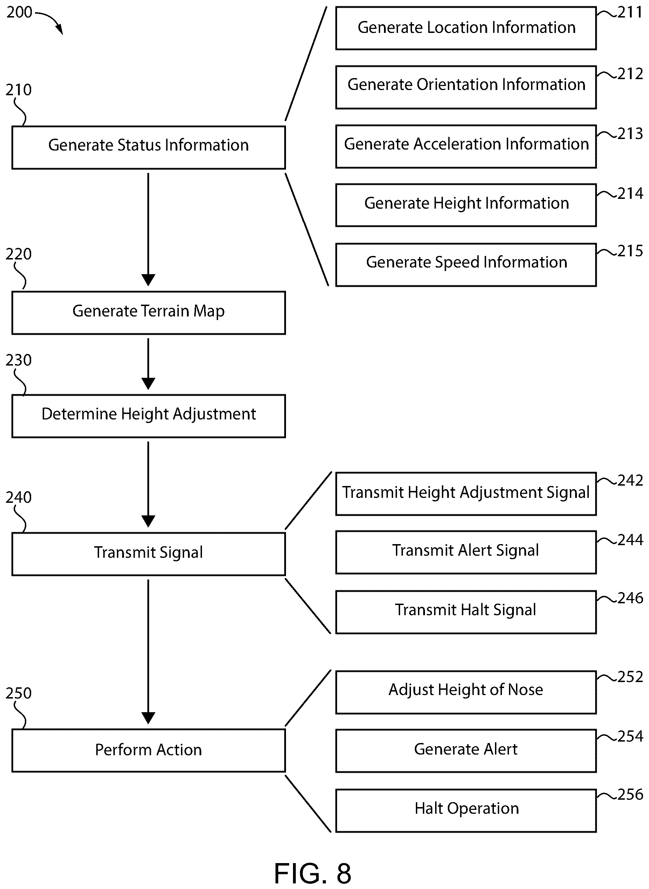

With additional reference to Fig. 8, an exemplary process 200 that may be performed using the system 90 and/or equipment 100 is illustrated. Blocks illustrated for the processes in the present application are understood to be examples only, and blocks may be combined or divided, and added or removed, as well as re-ordered in whole or in part, unless explicitly stated to the contrary. Unless specified to the contrary, it is contemplated that certain blocks performed in the process 200 may be performed wholly by an equipment-mounted controller 152, a remote controller 152, and/or the cloud server 92, or that the blocks may be distributed among one or more of the elements and/or additional devices or systems that are not specifically illustrated in Figs. 1-7. Additionally, while the blocks are illustrated in a relatively serial fashion, it is to be understood that two or more of the blocks may be performed concurrently or in parallel with one another. Moreover, while the process 200 is described herein with specific reference to the system 90 and equipment 100 illustrated in Figs. 1-7, it is to be appreciated that the process 200 may be performed with systems and/or equipment having additional and/or alternative features.

The process 200 may involve operating mobile agricultural equipment comprising a towing vehicle and a towed vehicle having a proximal end portion hitched to the towing vehicle, wherein the proximal end portion comprises a nose of the towing vehicle. For example, the process 200 may involve operating the mobile agricultural equipment 100, which comprises a towing vehicle 110 and a towed vehicle 120 having a proximal end portion 127 that is hitched to the towing vehicle 110 and which includes a nose 127'.

The process 200 can include block 210, which generally involves generating, by a sensor array of the mobile agricultural equipment, status information related to a location, orientation, and/or height of at least one sensor of the sensor array. For example, block 210 can include generating, by the sensor array 140, status information 155 related to the location of a GPS unit 141, orientation of an orientation sensor 142, acceleration of an IMU, height of a non-contact sensor 143 and/or height of a contact sensor 144.

In certain embodiments, block 210 includes block 211, which generally involves generating location information pertaining to a location of the at least one sensor. As one example, the sensor array 140 may include one or more GPS units 141 that generate the location information.

In certain embodiments, block 210 includes block 212, which generally involves generating orientation information pertaining to an orientation of the at least one sensor. For example, the sensor array 140 may include one or more orientation sensors 142 (e.g., tilt sensors and/or IMUs) that generate the orientation information.

In certain embodiments, block 210 includes block 213, which generally involves generating acceleration information pertaining to an acceleration of the at least one sensor. For example, the sensor array 140 may include one or more IMUs that generate the acceleration information, possibly in conjunction with orientation information.

In certain embodiments, block 210 includes block 214, which generally involves generating height information pertaining to a height of the at least one component. For example, the sensor array 140 may include one or more non-contact sensors 143 and/or one or more contact sensors 144 that generate the height information.

In certain embodiments, block 210 includes block 215, which generally involves generating speed information pertaining to a speed of at least one component of the equipment. For example, the sensor array 140 may include one or more speedometers 145 that generate the speed information.

As another example, the speed of the component may be determined based upon location information (e.g., from a GPS unit 141) and/or acceleration information (e.g., from an IMU).

In certain forms, the process 200 may include block 220, which generally involves generating a terrain map based upon the status information. For example, block 220 may involve generating a terrain map 156 based upon status information 155 generated by the sensor array 140. In certain forms, the terrain map 156 may be a two-dimensional map in which the axes correspond to the travel direction 102 and the vertical direction. In certain forms, the terrain map 156 may be a topographical map. In certain forms, the terrain map 156 may be a three-dimensional map of the terrain. Moreover, while certain embodiments involve generating the terrain map 156, it should be appreciated that in certain forms, the terrain map 156 may be pre-generated and provided to the control assembly 150.

The process 200 may include block 230, which generally involves determining a height adjustment based at least in part upon the status information. In certain forms, block 230 may involve determining an appropriate height adjustment based only on the status information 155. It is also contemplated that block 230 may involve determining the height adjustment based in part upon one or more other sets of information, such as a terrain map 156 and/or an equipment model 157. In certain forms, block 230 may include determining a target height for the nose 127' and determining the appropriate adjustment based upon a comparison of the target height and the actual height. In certain forms, block 230 may involve determining the height adjustment without determining a target height, for example by merely determining whether the nose 127' should be raised or lowered. Further details on example procedures for determining such adjustments are discussed above.

The process 200 may include block 240, which generally involves transmitting, by the control assembly, a signal based upon the appropriate height adjustment determined in block 230. As described herein, the process 200 may include block 250, which generally involves performing an action in response to the signal. As one example, block 240 may involve transmitting a height adjustment signal, and block 250 may involve adjusting a height of the nose based on the height adjustment signal. As another example, block 240 may involve transmitting an alert signal, and block 250 may involve generating an alert based on the alert signal. As a further example, block 240 may involve transmitting a halt signal, and block 250 may involve halting the operation of one or more components of the agricultural equipment 100 in response to the halt signal.

In certain embodiments, block 240 may include block 242, which generally involves transmitting a height adjustment signal. For example, block 242 may involve the control assembly 150 transmitting the height adjustment signal to the actuator 130. In these forms and others, block 250 may include block 252, which generally involves adjusting the height of the nose, for example based upon the height adjustment signal. By way of illustration, block 252 may involve adjusting, by the actuator 130, a relative height of the nose 127' based upon the height adjustment signal received from the control assembly 150. In certain forms, the adjusting may be performed automatically without requiring input from a user prior to the adjusting of block 252.

In certain embodiments, block 240 may include block 244, which generally involves transmitting an alert signal. For example, block 244 may involve the control assembly 150 transmitting the alert signal to the alert device 160. In these forms and others, block 250 may include block 254, which generally involves generating an alert, for example based upon the alert signal. By way of illustration, block 254 may involve the alert device 160 generating an audible and/or visual alert for the user. In certain embodiments, the system 90 may not necessarily adjust the height of the nose 127' in an automatic fashion. For example, the system 90 may instead provide to the user an alert that an adjustment is warranted, and the user may opt to adjust the height of the nose manually in response to the alert signal, for example by operating a lever that controls the actuator 130. By way of illustration, an alert action of block 254 may involve indicating to the user the appropriate direction of adjustment, for example by displaying an up arrow when the nose 127' should be raised and displaying a down arrow when the nose 127' should be lowered.

In certain embodiments, block 240 may include block 246, which generally involves transmitting a halt signal. In these forms and others, block 250 may include block 256, which generally involves halting operation of at least a portion of the agricultural equipment based on the halt signal. By way of illustration, the control assembly 150 may determine that a collision between the drawbar 126 and the terrain 80 is imminent, and that no available adjustment will avoid the collision. For example, avoiding the collision may require that the nose 127' be raised beyond the upper terminal position indicated in the equipment model 157. In these circumstances and/or others, the controller 150 may determine that it is appropriate to halt the equipment 100 from further travel in the forward travel direction 102, thereby preventing the collision. The user may then alter course to avoid the collision or override the halt signal.

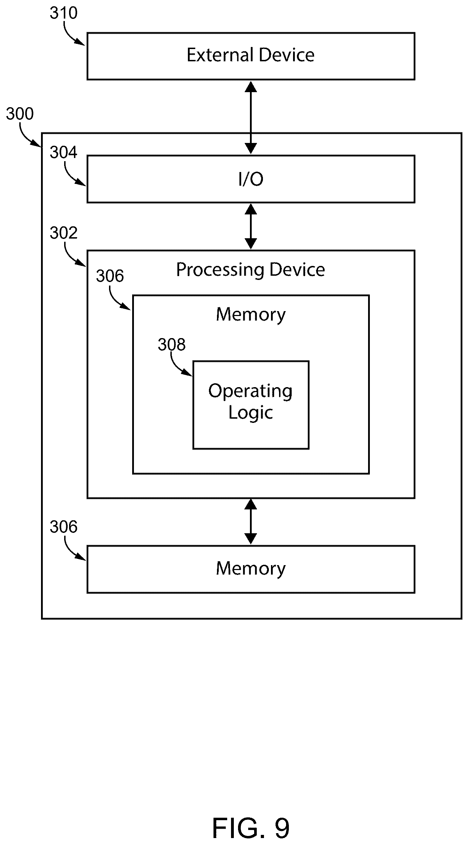

Referring now to Fig. 9, a simplified block diagram of at least one embodiment of a computing device 300 is shown. The illustrative computing device 300 depicts at least one embodiment of a controller that may be utilized in connection with the controller 152 illustrated in Fig. 4. Further, in some embodiments, the illustrative computing device 300 depicts at least one embodiment of a cloud server that may be utilized in connection with the cloud server 92 illustrated in Fig. 4.

Depending on the particular embodiment, the computing device 300 may be embodied as a server, desktop computer, laptop computer, tablet computer, notebook, netbook, Ultrabook^{™}, mobile computing device, cellular phone, smartphone, wearable computing device, personal digital assistant, Internet of Things (IoT) device, control panel, processing system, router, gateway, and/or any other computing, processing, and/or communication device capable of performing the functions described herein.

The computing device 300 includes a processing device 302 that executes algorithms and/or processes data in accordance with operating logic 308, an input/output device 304 that enables communication between the computing device 300 and one or more external devices 310, and memory 306 which stores, for example, data received from the external device 310 via the input/output device 304.

The input/output device 304 allows the computing device 300 to communicate with the external device 310. For example, the input/output device 304 may include a transceiver, a network adapter, a network card, an interface, one or more communication ports (e.g., a USB port, serial port, parallel port, an analog port, a digital port, VGA, DVI, HDMI, FireWire, CAT 5, or any other type of communication port or interface), and/or other communication circuitry. Communication circuitry may be configured to use any one or more communication technologies (e.g., wireless or wired communications) and associated protocols (e.g., Ethernet, Bluetooth^{®}, Bluetooth Low Energy (BLE), Wi-Fi^{®}, WiMAX, etc.) to effect such communication depending on the particular computing device 300. The input/output device 304 may include hardware, software, and/or firmware suitable for performing the techniques described herein.

The external device 310 may be any type of device that allows data to be inputted or outputted from the computing device 300. For example, in various embodiments, the external device 310 may be embodied as the actuator 130, the sensor array 140, and/or the cloud server 92. Further, in some embodiments, the external device 310 may be embodied as another computing device, switch, diagnostic tool, controller, printer, display, alarm, peripheral device (e.g., keyboard, mouse, touch screen display, etc.), and/or any other computing, processing, and/or communication device capable of performing the functions described herein. Furthermore, in some embodiments, it should be appreciated that the external device 310 may be integrated into the computing device 300.

The processing device 302 may be embodied as any type of processor(s) capable of performing the functions described herein. **In** particular, the processing device 302 may be embodied as one or more single or multi-core processors, microcontrollers, or other processor or processing/controlling circuits. For example, in some embodiments, the processing device 302 may include or be embodied as an arithmetic logic unit (ALU), central processing unit (CPU), digital signal processor (DSP), and/or another suitable processor(s). The processing device 302 may be a programmable type, a dedicated hardwired state machine, or a combination thereof. Processing devices 302 with multiple processing units may utilize distributed, pipelined, and/or parallel processing in various embodiments. Further, the processing device 302 may be dedicated to performance of just the operations described herein, or may be utilized in one or more additional applications. **In** the illustrative embodiment, the processing device 302 is of a programmable variety that executes algorithms and/or processes data in accordance with operating logic 308 as defined by programming instructions (such as software or firmware) stored in memory 306. Additionally or alternatively, the operating logic 308 for processing device 302 may be at least partially defined by hardwired logic or other hardware. Further, the processing device 302 may include one or more components of any type suitable to process the signals received from input/output device 304 or from other components or devices and to provide desired output signals. Such components may include digital circuitry, analog circuitry, or a combination thereof.

The memory 306 may be of one or more types of non-transitory computer-readable media, such as a solid-state memory, electromagnetic memory, optical memory, or a combination thereof. Furthermore, the memory 306 may be volatile and/or nonvolatile and, in some embodiments, some or all of the memory 306 may be of a portable variety, such as a disk, tape, memory stick, cartridge, and/or other suitable portable memory. In operation, the memory 306 may store various data and software used during operation of the computing device 300 such as operating systems, applications, programs, libraries, and drivers. It should be appreciated that the memory 306 may store data that is manipulated by the operating logic 308 of processing device 302, such as, for example, data representative of signals received from and/or sent to the input/output device 304 in addition to or in lieu of storing programming instructions defining operating logic 308. As illustrated, the memory 306 may be included with the processing device 302 and/or coupled to the processing device 302 depending on the particular embodiment. For example, in some embodiments, the processing device 302, the memory 306, and/or other components of the computing device 300 may form a portion of a system-on-a-chip (SoC) and be incorporated on a single integrated circuit chip.

In some embodiments, various components of the computing device 300 (e.g., the processing device 302 and the memory 306) may be communicatively coupled via an input/output subsystem, which may be embodied as circuitry and/or components to facilitate input/output operations with the processing device 302, the memory 306, and other components of the computing device 300. For example, the input/output subsystem may be embodied as, or otherwise include, memory controller hubs, input/output control hubs, firmware devices, communication links (i.e., point-to-point links, bus links, wires, cables, light guides, printed circuit board traces, etc.) and/or other components and subsystems to facilitate the input/output operations.

The computing device 300 may include other or additional components, such as those commonly found in a typical computing device (e.g., various input/output devices and/or other components), in other embodiments. It should be further appreciated that one or more of the components of the computing device 300 described herein may be distributed across multiple computing devices. In other words, the techniques described herein may be employed by a computing system that includes one or more computing devices. Additionally, although only a single processing device 302, I/O device 304, and memory 306 are illustratively shown in Fig. 9, it should be appreciated that a particular computing device 300 may include multiple processing devices 302, I/O devices 304, and/or memories 306 in other embodiments. Further, in some embodiments, more than one external device 310 may be in communication with the computing device 300.

## Claims

1. A system (90), comprising:
mobile agricultural equipment (100), comprising:
a towing vehicle (110) comprising a hitch (116);
a towed vehicle (120) comprising a proximal end portion (127) coupled to the towing vehicle (110) via the hitch (116), wherein the proximal end portion (127) defines a nose (127') of the towed vehicle (120);
a sensor array (140) comprising at least one sensor, wherein the sensor array (140) is configured to generate status information (155) related to a location, orientation, acceleration, and/or height of the at least one sensor; and
an actuator (130) operable to adjust a relative height of the proximal end portion (127); and
a control assembly (150) in communication with the sensor array (140) and the actuator (130);
wherein the control assembly (150) is configured to determine an appropriate height adjustment for the nose (127') based on the status information (155), and to transmit a signal based upon the appropriate height adjustment.

2. The system (90) of claim 1, wherein the signal comprises a height adjustment signal; and
wherein the actuator (130) is configured to adjust a height of the nose (127') based upon the height adjustment signal.

3. The system (90) of claim 1 or 2, wherein the control assembly (150) is further configured to generate a terrain map (156) representative of terrain (80) over which the equipment (100) travels based upon the status information (155), and to determine the appropriate height adjustment based upon the terrain map (156).

4. The system (90) of one of the claims 1 to 3, wherein the control assembly (150) is configured to determine the appropriate height adjustment based further upon a model (157) of the agricultural equipment (100).

5. The system (90) one of the claims 1 to 4, wherein the sensor array (140) comprises a global positioning system (GPS) unit (141) and an orientation sensor (142); and
wherein the status information (155) comprises location information generated by the GPS unit (141) and orientation information generated by the orientation sensor (142).

6. The system (90) of one of the claims 1 to 5, wherein the agricultural equipment (100) further comprises a speedometer (145); and
wherein the control assembly (150) is configured to determine the appropriate height adjustment based further on a speed of the agricultural equipment (100).

7. The system (90) of one of the claims 1 to 6, wherein the sensor array (140) comprises a height sensor (143, 144); and
wherein the status information (155) comprises height information generated by the height sensor (143, 144).

8. The system (90) of one of the claims 1 to 7, wherein the signal comprises an alert signal configured to alert a user regarding the appropriate height adjustment.

9. A method (200) of operating a system (90) according to one of the claims 1 to 8, the method (200) comprising:
generating (210), by a sensor array (140) of the mobile agricultural equipment (100), status information (155) related to a location, orientation, acceleration, and/or height of at least one sensor of the sensor array (140);
determining (230), by a control assembly (150) in communication with the sensor array (140), an appropriate height adjustment for the nose (127') based on the status information (155);
transmitting (240), by the control assembly (150), a signal based on the appropriate height adjustment.

10. The method (200) of claim 9, wherein transmitting (240) the signal comprises transmitting (242), to an actuator (130) of the mobile agricultural equipment (100), a height adjustment signal; and
wherein the method further comprises adjusting (252), by the actuator (130), a relative height of the nose (127') in response to the height adjustment signal.

11. The method (200) of claim 9 or 10, wherein determining (230) the appropriate height adjustment for the nose (127') is further based on a terrain map (156) representing terrain (80) over which the mobile agricultural equipment (100) moves.

12. The method (200) of one of the claims 9 to 11, further comprising generating (220) the terrain map (156) based upon the status information (155)*.*

13. The method (200) of one of the claims 9 to 12, wherein determining (230) the appropriate height adjustment for the nose (127') is further based on a model (157) of the mobile agricultural equipment (100).

14. The method (200) of one of the claims 9 to 13, wherein at least a portion of the control assembly (150) is located at a cloud server (92) that performs at least a portion of the method (200).

15. The method (200) of one of the claims 9 to 14, wherein the status information (155) comprises location information generated by a global positioning system (GPS) unit (141) of the sensor array (140), and orientation information generated by an orientation sensor (142) of the sensor array (140); and
wherein the method (200) further comprises generating (220) a terrain map (156) based upon the location information and the orientation information; and
wherein determining (230) the appropriate height adjustment for the nose (127') based on the status information (155) comprises determining the appropriate height adjustment based upon the terrain map (156) and a model (157) of the mobile agricultural equipment (100).
